# EUROPÄISCHE PATENTSCHRIFT

(11) **EP 0 618 390 B1**
(45) Veröffentlichungstag und Bekanntmachung des Hinweises auf die Patenterteilung: **03.12.1997**
(21) Anmeldenummer: 94100435.0
(22) Anmeldetag: 13.01.1994
(51) Int. Cl.: F16L 9/12, B32B 27/36

(54) **Mehrschichtiges Kunststoffrohr**
Multi-layered plastic pipe
Tuyau multi-couche en matière plastique

(30) Priorität: 02.04.1993 DE 4310884
(43) Veröffentlichungstag der Anmeldung: 05.10.1994
(73) Patentinhaber: HÜLS AKTIENGESELLSCHAFT, 45764 Marl (DE)
(72) Erfinder: Röber, Stefan, Dr., D-45772 Marl (DE); Jadamus, Hans, Dr., D-45768 Marl (DE); Böer, Michael, D-45739 Oer-Erkenschwick (DE); Feinauer, Roland, Dr., D-45770 Marl (DE); Herrmann, Hans-Dieter, D-45770 Marl (DE); Ries, Hans, Dr., D-45772 Marl (DE)

(56) Entgegenhaltungen:
- EP-A- 0 094 215
- EP-A- 0 469 925
- WO-A-93/25835
- DE-C- 4 001 126
- US-A- 3 857 754

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-A-35 10 395; DE-A-37 1 251; DE-C-38 21 723; DE-C-40 01 125; DE-C-40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In FR-A-2 602 515 wird ein zweischichtiges Rohr mit einer Außenschicht aus Polyamid 11 und einer inneren Schicht aus weichgemachtem Polyvinylidenfluorid beschrieben. Untersuchungen haben jedoch gezeigt, daß die Sperrwirkung gegenüber dem durchfließendem Medium nicht befriedigt.

Vor allem die Permeation von methanol-haltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Aufgabe der Erfindung war es, ein Polyamidrohr mit einer guten Sperrwirkung gegen das transportierte Medium, vor allem gegenüber methanol-haltigen Kraftstoffen, einer zufriedenstellenden Maßhaltigkeit sowie einer befriedigenden mechanischen Belastbarkeit zu entwickeln.

Diese Aufgabe wird gelöst durch ein mehrschichtiges Kunststoffrohr, das
I. mindestens aus einer Außenschicht,
II. mindestens aus einer Innenschicht auf Basis einer Formmasse aus Polyvinylidenfluorid
und
III. aus einer zu der Innenschicht II. nach außen benachbarten Schicht auf Basis einer Formmasse aus einer Mischung aus
   a. Polyamid
      und
   b. Poly(alkyl)acrylsäureester
besteht, wobei die Schichten miteinander kraftschlüssig verbunden sind.

Zweckmäßige Weiterbildungen der Erfindung sind in den abhängigen Ansprüchen beschrieben.

Für die Außenschicht sowie für die Komponente III. a. kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes,** S. 424-67; Interscience Publishers, New York (1977); DE-AS 21 52 194).

Ebenfalls geeignet als Polyamide sind gemischt aliphatische/aromatische Polykondensate wie sie z. B. in den US-A-2 071 250; US-A-2 071 251; US-A-2 130 523; US-A-2 130 948; US-A-2 241 322; US-A-2 312 966; US-A-2 512 606; US-A-3 393 210 bzw. in Kirk-Othmer, **Encyclopedia of Chemical Technology,** 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in DE-A-27 12 987, DE-A-25 23 991, DE-A-30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηᵣₑₗ) im Bereich von 1,9 bis 2,4.

Als Polyamide für die Komponenten I. bzw. III.a. können gleiche oder unterschiedliche Polyamidtypen gewählt werden.

Bevorzugt sind Polyamide, die < 50 % Aminoendgruppen, insbesondere < 20 % Aminoendgruppen, enthalten.

Die Polyamide der Außenschicht gemäß I. bzw. der Komponente III. a. können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates,** Interscience Publishers, New York (1981)], Acrylnitril/Styrol/Butadien- (Houben-Weyl, **Methoden der organischen Chemie,** Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisate (**Ullmanns Encyclopädie der technischen Chemie,** 4. Auflage, Bd. 19, Verlag Chemie Weinheim (1981), S. 273 ff.) oder Polyphenylenether (DE-A-32 24 691 u. DE-A-32 24 692, US-A-3 306 874, US-A-3 306 875 u. US-A-4 028 341) genannt.

Sofern erforderlich können die Polyamide schlagzäh eingestellt werden. Geeignete Modifier sind z. B. Ethylen/Propylen- oder Ethylen/Propylen/-Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin seien schlagzähmachende Kautschuke genannt: Kern/Schale-Kautschuke mit einem zähelastischen Kern aus (Meth)Acrylat-, Butadien- oder Styrol/-Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-A-21 44 528, DE-A-37 28 685). Der Anteil an schlagzähmachender Komponente ist so zu wählen, daß die gewünschten Eigenschaften nicht verschlechtert werden.

Die Innenschicht II. enthält insbesondere Polyvinylidenfluorid, welches bevorzugt weichmacherfrei eingesetzt wird. Herstellung und Struktur des Polymeren sind bekannt. (Hans R. Kricheldorf, **Handbook of Polymer Synthesis,** Part A, Verlag Marcel Dekker Inc. New York - Basel - Hongkong, S. 191 f; **Kunststoff Handbuch,** 1. Auflage, Band XI, Carl Hanser Verlag München (1971), S. 403 ff).

Es können auch Copolymere auf Basis von Polyvinylidenfluorid erfindungsgemäß enthalten sein, die bis zu 40 Gew.-% andere Monomere aufweisen. Als solche zusätzlichen Monomere seien beispielhaft genannt: Trifluorethylen, Ethylen, Propen und Hexafluorpropen.

Das eingesetzte erfindungsgemäße Polyvinylidenfluorid weist in der Regel einen Melt Flow Index von < 17 g/10 min, vorzugsweise von 2 bis 13 g/10 min (DIN 53 735) auf.

Als Komponente b. der Schicht gemäß III. werden Poly(alkyl)acrylsäureester mit 1 bis 6 C-Atomen in der Kohlenstoffkette des Alkohol- bzw. des Alkylrestes eingesetzt, wobei die Methylgruppe bevorzugt ist. Die Poly(alkyl)acrylsäureester weisen einen Melt flow-Index von 0,8 bis 30 g/10 min, vorzugsweise von 0,2 bis 15 g/10 min, auf.

Als Beispiele seien u. a. Polymethylmethacrylat, Polybutylmethacrylat genannt.

Es können aber auch Copolymere der Poly(alkyl)acrylsäureester zum Einsatz kommen. So können bis zu 50 Gew.-%, vorzugsweise von 5 bis 30 Gew.-%, des (Alkyl)acrylsäureesters durch andere Monomere wie z. B. (Meth)acrylsäure, Hexyl(meth)acrylat, Styrol, Maleinsäureanhydrid o. ä. ersetzt sein. Bevorzugt sind Copolymere aus Methyl(meth)acrylat mit einem Anteil von < 30 Gew.-%, vorzugsweise von 12 bis 18 Gew.-% Styrol und von ≤ 20 Gew.-%, vorzugsweise von 8 bis 12 Gew.-% Maleinsäureanhyrid.

Desweiteren kann als Poly(alkyl)acrylsäureester ein Polymer eingesetzt werden, welches nachstehende Grundbausteine aufweist:
i) < 100 Gew.-%, vorzugsweise
   40 bis 80 Gew.-% 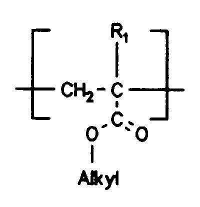
ii) < 100 Gew.-%, vorzugsweise
   10 bis 50 Gew.-% 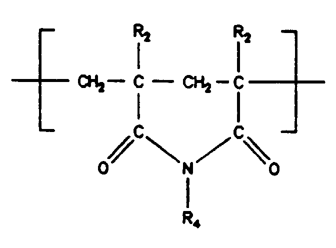
iii) < 30 Gew.-%, vorzugsweise
   1 bis 15 Gew.-%

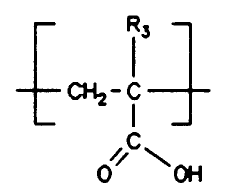

In den genannten Formeln bedeuten
Alkyl = Methyl, Ethyl, Propyl, Butyl, Hexyl
R₁ bis R₄ = -H, -(CₙH₂ₙ₊₁)
n = 0 bis 6
wobei die Reste R₁ bis R₄ gleich oder verschieden sein können. Bevorzugt sind solche Grundbausteine, in denen R₁ bis R₄ einen Methylrest bedeuten.

Die zuletzt genannten Polymeren werden auch als Polyglutarimide bezeichnet, da es sich um Polyalkyl(meth)acrylate handelt, bei denen zwei benachbarte Carboxyl(at)gruppen zu einem cyclischen Säureimid umgesetzt worden sind. Die Imidbildung wird bevorzugt mit Ammoniak bzw. primären Aminen, wie z. B. mit Methylamin, durchgeführt. Die Produkte sowie ihre Herstellung sind bekannt (Hans R. Kricheldorf, **Handbook of Polymer Synthesis,** Part A, Verlag Marcel Dekker Inc. New York - Basel - Hongkong, S. 223 f; H. G. Elias, **Makromoleküle**, Hüthig und Wepf Verlag Basel - Heidelberg - New York; US-PSS 2 146 209, 4 246 374).

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Die Komponenten III. a. und III. b. werden im Gewichtsverhältnis 50 bis 90 : 50 bis 10, vorzugweise 60 bis 80 : 40 bis 20 eingesetzt.

Den Formmassen für die Schichten gemäß I. bis III. können übliche Hilfsund Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der Formmasse für die Schicht gemäß III. erfolgt nach üblichen und bekannten Verfahren durch Schmelzemischen der Komponenten III. a. und III. b. in einem gut knetenden Mischaggregat, wie z. B. einem Doppelschneckenkneter, bei Temperaturen, die sich nach den Schmelzpunkten der Komponenten III. a. und III. b. richten, im allgemeinen bei Temperaturen zwischen 200 und 300 °C.

Die Herstellung der Formmasse für die Schicht gemäß III. kann auch direkt in einem Speiseextruder, der zur Herstellung der mehrschichtigen Rohre in der verwendeten Coextrusionsanlage oder Spritzgußanlage eingesetzt ist, erfolgen, so daß die Formmasse für die Schicht gemäß III. direkt im Anschluß an ihre Herstellung - ohne weitere Zwischenlagerung - zu einer Schicht des mehrschichtigen Rohres verarbeitet werden kann.

Die Fertigung der mehrschichtigen Rohre erfolgt in bekannter, wie z. B. weiter oben im Stand der Technik beschriebenen Weise.

In der bevorzugten Ausführungsform haben die mehrschichtigen Rohre einen dreischichtigen Aufbau: Komponente I./Komponente III./Komponente II. Darüber hinaus ist es auch möglich, neben einem 3-Schichtrohr andere Rohrtypen mit mehr als 3 Schichten herzustellen. Bevorzugt sind erfindungsgemäße mehrschichtige Rohre, bei denen die Schicht II. elektrisch leitfähig eingestellt ist. Auch ist es möglich, dadurch eine gute Leitfähigkeit zu erreichen, daß nach innen benachbart zur Schicht II. eine weitere Polyvinylidenschicht eingearbeitet ist, die eine hohe Leitfähigkeit aufweist. Eine gute elektrische Leitfähigkeit wird durch Zugabe von bis zu 15 Gew.-% von z. B. Leitfähigkeitsruß, Kohlenstoffasern o. ä. erreicht.

Es sind auch Mehrschichtrohre möglich, bei denen die Schicht gemäß I. durch die Komponente gemäß III. gebildet wird.

Bei einem mehrschichtigen Rohr mit einem Außendurchmesser von 8 mm und einer Gesamtwandstärke von 1 mm können die Schichtdicken beispielsweise von innen nach außen 0,1 mm, 0,1 mm, 0,8 mm betragen. Erfindungsgemäß sind auch andere Schichtdickenverteilungen denkbar, beispielsweise mit einer dickeren Innenschicht von z. B. 0,2 mm.

Die erfindungsgemäßen mehrschichtigen Rohre weisen in hervorragendem Maße eine gute Beständigkeit sowie gute Sperrwirkung gegen Diffusion gegenüber (petro)chemischen Stoffen, Lösemitteln und Kraftstoffen auf. Ferner sind die benachbarten Schichten kraftschlüssig miteinander verbunden, so daß es z. B. bei thermischer Ausdehnung oder Biegen eines Rohres kein Abscheren der benachbarten Schichten voneinander auftritt.

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff. Eine weitere Verwendung der mehrschichtigen Rohre besteht darin, daß aus ihnen Hohlkörper wie Tankbehälter oder Einfüllstutzen, insbesondere für den Kraftfahrzeugsektor, hergestellt werden.

Die genannten Parameter wurden mit Hilfe nachstehender Meßverfahren bestimmt.

Die **Bestimmung der Lösungsviskosität** (rel. Viskosität ηᵣₑₗ) **der Polyamide** erfolgt unter Verwendung einer 0,5 gew.-%igen m-Kresol-Lösung bei 25 °C gemäß DIN 53 727/IS0 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen in den Polyamiden wird 1 g Polykon**densat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Bestimmung des Melt Flow-Index der Polyvinylidenfluoride erfolgt bei** 230 °C und unter einer Belastung von 5 kg (DIN 53 735).

Die **Bestimmung des Melt Flow-Index der Polyalkyl(meth)acrylate** erfolgt bei 230 °C und unter einer Belastung von 3,8 kg (DIN 53 735).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M 15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.

### Beispiele

### A. Komponente I.

- **PA 1:**: Polyamid 12 (ηrel: 2,1; Weichmachergehalt: 0; Aminoendgruppengehalt: 9 mmol/kg; Carboxylendgruppengehalt: 48 mmol/kg; VESTAMID® L 2140 - HÜLS AG)
- **PA 2:**: Polyamid 12 (ηrel: 2,1; Weichmachergehalt auf 100 Gew.-Tl. Polyamid: 15 Gew.-Tl. N-n-Butylbenzolsulfonamid; Aminoendgruppengehalt: 9 mmol/kg; Carboxylendgruppengehalt: 48 mmol/kg; VESTAMID® L 2124-HÜLS AG)
- **PA 3:**: Polyamid 6.12 (ηᵣₑₗ: 1,9; Weichmachergehalt: 0)

### B. Komponente II.

- **PVDF 1:**: Polyvinylidenfluorid (Melt Flow Index: 13 g/10 min; DYFLOR® LE - HÜLS AG).
- **PVDF 2:**: Polyvinylidenfluorid (Melt Flow Index: 8,5 g/10 min; DYFLOR® EE - HÜLS AG).
- **PVDF 3:**: Polyvinylidenfluorid, bestehend aus
a. 100 Gew.-Tl. Polyvinylidenfluorid (Melt Flow Index: 8,5 g/10 min; DYFLOR® EE - HÜLS AG)
und
b. 6 Gew.-Tl. handelsüblichem Leitfähigkeitsruß (Ketjenblack EC 300 - AKZO)

### C. Komponente III.

- **Z 1:**: Mischung bestehend aus
a. 20 Gew.-Tl. Polyamid 12
(ηᵣₑₗ: 2,1; Weichmachergehalt: 0; Aminoendgruppengehalt:
9 mmol/kg, Carboxylendgruppengehalt: 48 mmol/kg; VESTAMID® L 2140 - HÜLS AG)
und
b. 80 Gew.-Tl. Polymethylmethacrylat
(Melt Flow Index: 3 g/10 min; PLEXIGLAS® 8N - RÖHM GMBH), hergestellt im Doppelschneckenkneter bei einer Massetemperatur von 300 °C.
- **Z 2:**: Mischung bestehend aus
a. 70 Gew.-Tl. Polyamid 12
(ηᵣₑₗ: 2,1; Weichmachergehalt: 0; Aminoendgruppengehalt:
9 mmol/kg; Carboxylendgruppengehalt: 48 mmol/kg; VESTAMID® L 2140 - HÜLS AG)
und
b. 30 Gew.-Tl. Copolymer auf Basis Polymethylmethacrylat
(Melt Flow Index: 1,8 g/10 min)
bestehend aus
b.1 75 Gew.-Tl. Methylmethacrylat,
b.2 15 Gew.-Tl. Styrol und
b.3 10 Gew.-Tl. Maleinsäureanhydrid, hergestellt im Doppelschneckenkneter mit Massetemperatur 290 °C.
- **Z 3:**: Mischung bestehend aus
a. 70 Gew.-Tl. Polyamid 12
(ηᵣₑₗ: 2,1; Weichmachergehalt: 0; Aminoendgruppengehalt:
9 mmol/kg; Carboxylendgruppengehalt: 48 mmol/kg; VESTAMID® L 2140 - HÜLS AG)
und
b. 30 Gew.-Tl. Copolymer bestehend aus
b.1 10 Gew.-% Methacrylsäure
und
b.2 90 Gew.-% Polyglutarimid, hergestellt durch Imidisierung von Polymethylmethacrylat mit Methylamin, so daß 30 Gew.-% von Komponente b.2 Imideinheiten darstellen, hergestellt im Doppelschneckenkneter mit Massetemperatur 280 °C.
- **Z 4:**: Mischung bestehend aus
a. 60 Gew.-Tl. Polyamid 12
(ηᵣₑₗ: 2,1; Weichmachergehalt: 0; Aminoendgruppengehalt:
9 mmol/kg; Carboxylendgruppengehalt: 48 mmol/kg; VESTAMID® L 2140 - HÜLS AG)
und
b. 40 Gew.-Tl. Polyglutarimid, hergestellt durch
Imidisierung von Polymethylmethacrylat mit Methylamin, so daß 30 Gew.-% von Komponente b. Imideinheiten darstellen,
hergestellt im Doppelschneckenkneter mit Massetemperatur 280 °C.
- **Z 5:**: Mischung bestehend aus
a. 50 Gew.-Tl. Polyamid 12
(ηᵣₑₗ: 2,1; Weichmachergehalt: 0; Aminoendgruppengehalt:
9 mmol/kg; Carboxylendgruppengehalt: 48 mmol/kg; VESTAMID® L 2140 - HÜLS AG)
und
b. 50 Gew.-Tl. Copolymer bestehend aus
b.1. 10 Gew.-% Methacrylsäure und
b.2. 90 Gew.-% Polyglutarimid mit 30 Gew.-% Imideinheiten, erhalten durch Imidisierung von Polymethylmethacrylat mit Methylamin hergestellt im Doppelschneckenkneter bei einer Massetemperatur von 280 °C.
- **Z 6:**: Mischung bestehend aus
a. 75 Gew.-Tl. einer Mischung aus
a.1. 60 Gew.-% Polyamid 12
(ηᵣₑₗ: 2,1; Weichmachergehalt: 0; Aminoendgruppengehalt:
9 mmol/kg; Carboxylendgruppengehalt: 48 mmol/kg; VESTAMID® L 2140 - HÜLS AG) und
a.2. 40 Gew.-% Polyamid 10.12
(ηᵣₑₗ:2,0, Weichmachergehalt: 0) und
b. 25 Gew.-Tl. Polyglutarimid mit 30 Gew.-% Imideinheiten, erhalten durch Imidisierung von Polymethylmethacrylat mit Methylamin
hergestellt im Doppelschneckenkneter bei einer Massetemperatur von 260 °C.

### D. Herstellung der mehrschichtigen Rohre

Die Rohre wurden auf einer Laborextrusionsanlage mit einem Fünfschichtwerkzeug (bei der Herstellung der Dreischichtrohre bleiben 2 Kanäle, bei der Herstellung des Zweischichtrohres bleiben 3 Kanäle geschlossen) hergestellt. Die Zylindertemperaturen lagen bei 230 °C (PA 1, PA 2, PA 3), 250 °C (PVDF 1, PVDF 2, PVDF 3), 260 °C (Z 2, Z 3, Z 4, Z 5) und 290 °C (Z 1). Die Schichtdicken der Dreischichtrohre betragen von Innen nach Außen: 0,18 mm; 0,07 mm; 0,75 mm. Die Schichtdicken des Zweischichtrohres betragen von Innen nach Außen: 0,18 mm; 0,82 mm.

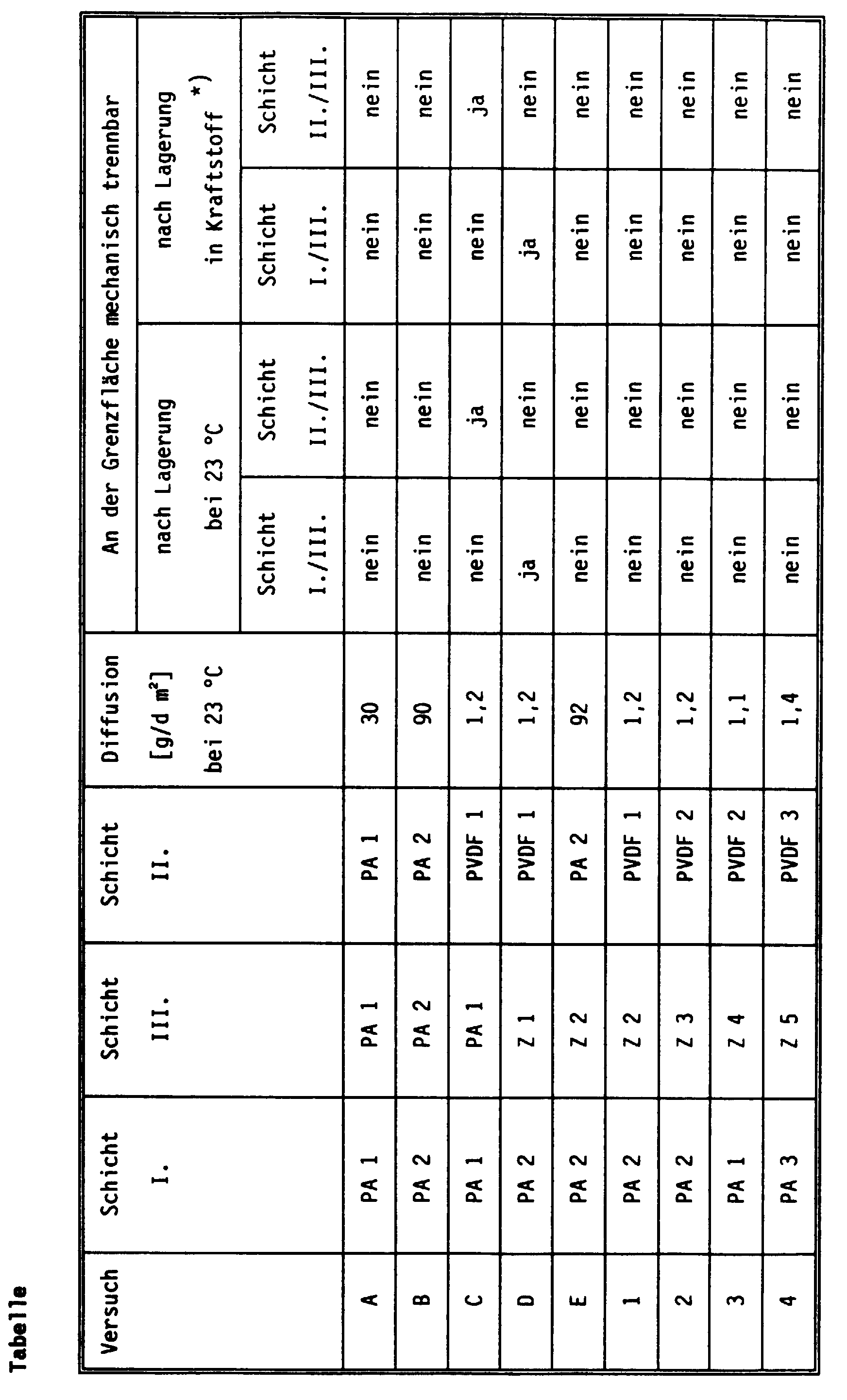

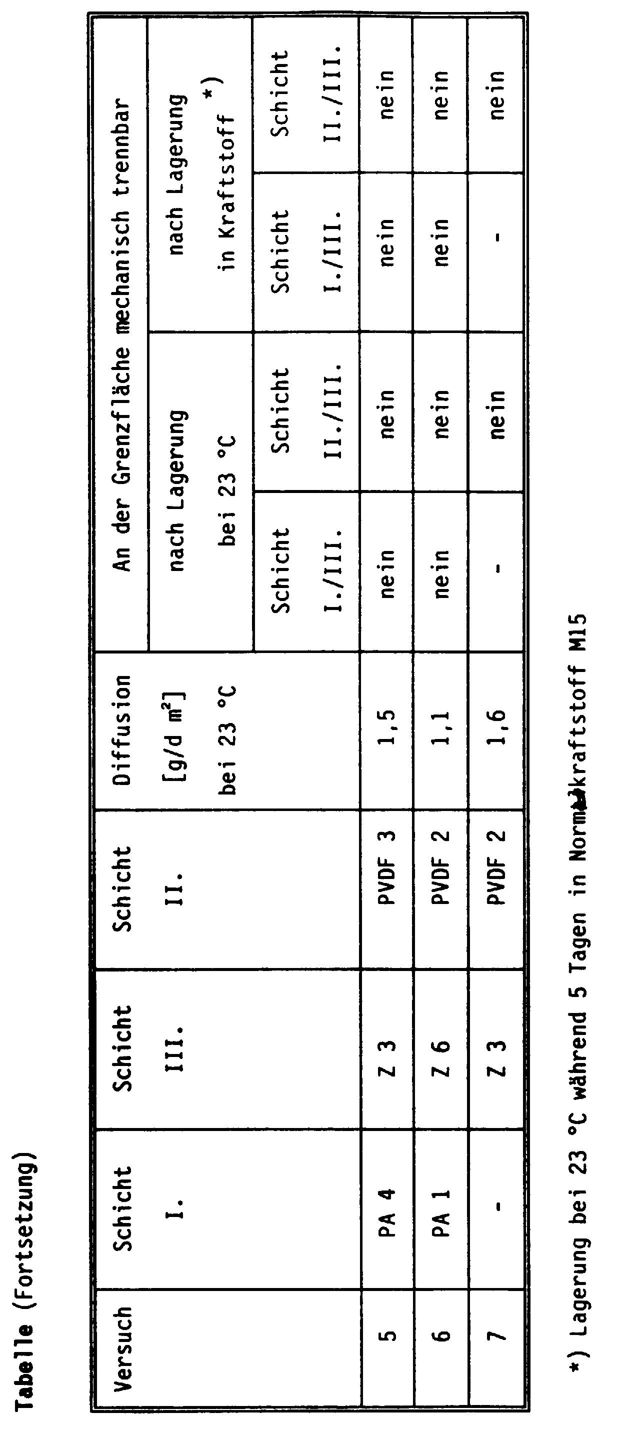

## Patentansprüche

1. Mehrschichtiges Kunststoffrohr,
dadurch gekennzeichnet, daß es
I. mindestens aus einer Außenschicht,
II. mindestens aus einer Innenschicht auf Basis einer Formmasse aus Polyvinylidenfluorid
und
III. aus einer zu der Innenschicht II. nach außen benachbarten Schicht auf Basis einer Formmasse aus einer Mischung aus
a. Polyamid
und
b. Poly(alkyl)acrylsäureester
besteht, wobei die Schichten miteinander kraftschlüssig verbunden sind.

2. Mehrschichtiges Kunststoffrohr nach Anspruch 1,
dadurch gekennzeichnet,
daß die Schicht gemäß I. eine Formmasse auf Basis eines Polyamids darstellt.

3. Mehrschichtiges Kunststoffrohr nach den Ansprüchen 1 und 2,
dadurch gekennzeichnet,
daß die Schicht gemäß II. ein Vinylidenfluoridcopolymeres darstellt.

4. Mehrschichtiges Kunststoffrohr nach den Ansprüchen 1 bis 3,
dadurch gekennzeichnet,
daß die Schicht gemäß III. eine Formmasse auf Basis eines Gemisches aus
50 bis 90 Gew.-% der Komponente III. a.
und
10 bis 50 Gew.-% der Komponente III. b.
darstellt.

5. Mehrschichtiges Kunststoffrohr nach den Ansprüchen 1 bis 4,
dadurch gekennzeichnet,
daß die Schicht gemäß III. eine Formmasse auf Basis eines Gemisches aus
60 bis 80 Gew.-% der Komponente III. a.
und
20 bis 40 Gew.-% der Komponente III. b.
darstellt.

6. Mehrschichtiges Kunststoffrohr nach den Ansprüchen 1 bis 5,
dadurch gekennzeichnet,
daß die Komponente III. b. ein Copolymeres aus Methylmethacrylat, Styrol und Maleinsäureanhydrid darstellt.

7. Mehrschichtiges Kunststoffrohr nach den Ansprüchen 1 bis 5,
dadurch gekennzeichnet,
daß die Komponente III. b. nachstehende Grundbausteine aufweist:
i) < 100 Gew.-% 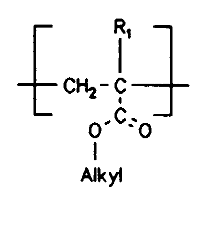
ii) < 100 Gew.-% 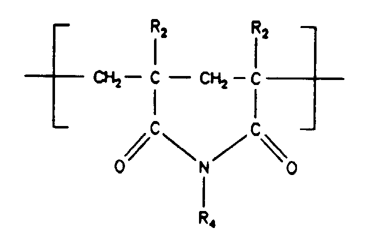
iii) < 30 Gew.-% 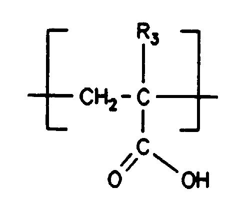
wobei Alkyl = Methyl, Ethyl, Propyl, Butyl, Hexyl
R₁ bis R₄ = -H, -(CₙH₂ₙ₊₁)
n = 0 bis 6 bedeuten
und die Substituenten gleich oder verschieden sein können.

8. Mehrschichtiges Kunststoffrohr nach den Ansprüchen 1 bis 5,
dadurch gekennzeichnet,
daß die Komponente III. b. nachstehende Grundbausteine aufweist:
i) 40 bis 80 Gew.-% 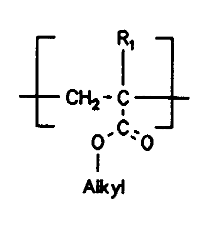
ii) 10 bis 50 Gew.-% 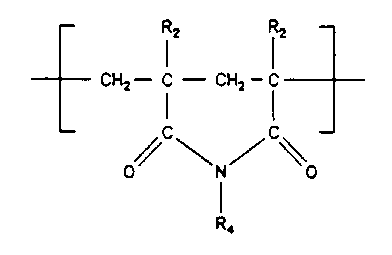
iii) 1 bis 15 Gew.-% 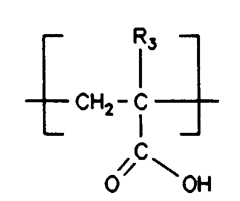
wobei Alkyl = Methyl, Ethyl, Propyl, Butyl, Hexyl
R₁ bis R₄ = -H, -(CₙH₂ₙ₊₁)
n = 0 bis 6 bedeuten
und die Substituenten gleich oder verschieden sein können.

9. Mehrschichtiges Kunststoffrohr nach Anspruch 7 und 8,
dadurch gekennzeichnet,
daß Alkyl sowie R₁ bis R₄ eine Methylgruppe darstellen.

10. Mehrschichtiges Kunststoffrohr nach den Ansprüchen 1 bis 9,
dadurch gekennzeichnet,
daß die Schicht gemäß I. durch eine Komponente gemäß III. gebildet wird.

11. Verwendung des mehrschichtigen Kunststoffrohres nach den Ansprüchen 1 bis 10 für den Transport (petro)chemischer Stoffe.

12. Verwendung des mehrschichtigen Kunststoffrohres nach den Ansprüchen 1 bis 10 auf dem Kraftfahrzeugsektor zum Durchleiten von Brems-, Kühl- und Hydraulikflüssigkeiten sowie Kraftstoff.

13. Verwendung des mehrschichtigen Kunststoffrohres nach den Ansprüchen 1 bis 10 zur Herstellung von Hohlkörpern.

14. Verwendung des mehrschichtigen Kunststoffrohres nach den Ansprüchen 1 bis 10 zur Herstellung von Tankeinfüllstutzen oder Kraftstofftanks im Kraftfahrzeugsektor.

## Claims

1. A multilayer plastic pipe, characterized in that it comprises
I. at least one outer layer,
II. at least one inner layer based on a polyvinylidene fluoride moulding composition, and
III. a layer, adjacent to and outside of the inner layer II., based on a moulding composition comprising a mixture of
a. polyamide
and
b. poly(alkyl)acrylate,
where the layers are adhesively bonded to one another.

2. A multilayer plastic pipe according to claim 1, characterized in that the layer as described in I. is a moulding composition based on a polyamide.

3. A multilayer plastic pipe according to either of claims 1 and 2, characterized in that the layer as described in II. is a vinylidene fluoride copolymer.

4. A multilayer plastic pipe according to any of claims 1 to 3, characterized in that the layer as described in III. is a moulding composition based on a mixture of
from 50 to 90% by weight of component III.a.
and
from 10 to 50% by weight of component III.b.

5. A multilayer plastic pipe according to any of claims 1 to 4, characterized in that the layer as described in III. is a moulding composition based on the mixture of
from 60 to 80% by weight of component III.a.
and
from 20 to 40% by weight of component III.b.

6. A multilayer plastic pipe according to any of claims 1 to 5, characterized in that component III.b. is a copolymer of methyl methacrylate, styrene and maleic anhydride.

7. A multilayer plastic pipe according to any of claims 1 to 5, characterized in that component III.b. contains the following basic units:
i) < 100% by weight 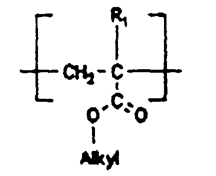
ii) < 100% by weight 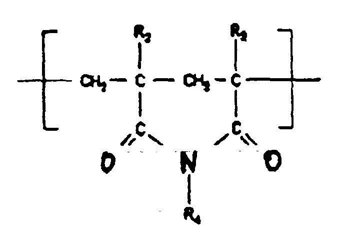
iii) < 30% by weight 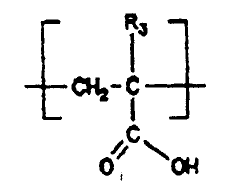 where alkyl is methyl, ethyl, propyl, butyl or hexyl,
R₁ to R₄ are -H or -(CₙH₂ₙ₊₁), where
n = 0 to 6,
and their substituents may be identical or different.

8. A multilayer plastic pipe according to any of claims 1 to 5, characterized in that component III.b. contains the following basic units:
i) from 40 to 80% by weight 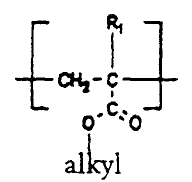
ii) from 10 to 50% by weight 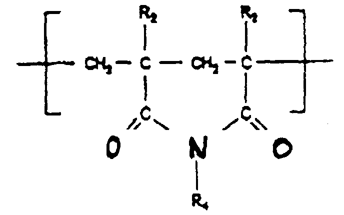
iii) from 1 to 15% by weight 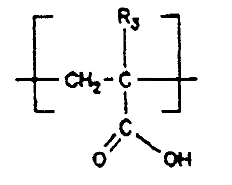
where alkyl is methyl, ethyl, propyl, butyl or hexyl,
R₁ to R₄ are -H or -(CₙH₂ₙ₊₁), where
n = 0 to 6,
and their substituents may be identical or different.

9. A multilayer plastic pipe according to either of claims 7 and 8, characterized in that alkyl and R₁ to R₄ are methyl.

10. A multilayer plastic pipe according to any of claims 1 to 9, characterized in that the layer as described in I. is formed by a component as described in III.

11. Use of the multilayer plastic pipe according to any of claims 1 to 10 for the transport of petrochemical substances.

12. Use of the multilayer plastic pipe according to any of claims 1 to 10 in the motor vehicle sector for carrying brake, cooling and hydraulic fluids and fuel.

13. Use of the multilayer plastic pipe according to any of claims 1 to 10 for the production of hollow articles.

14. Use of the multilayer plastic pipe according to any of claims 1 to 10 for the production of filling nozzles or fuel tanks in the motor vehicle sector.

## Revendications

1. Tube en matière plastique à plusieurs couches,
caractérisé en ce qu'
il consiste :
I - au moins en une couche externe,
II - au moins en une couche interne à base d'une masse moulée en fluorure de polyvinylidène, et
III - en une couche voisine de la couche interne II vers l'extérieur à base d'une masse moulée formée d'un mélange de
a - polyamide, et
b - un ester d'acide poly(alkyl)acrylique
dans lequel les couches sont liées les unes aux autres par interpénétration par la force.

2. Tube en matière plastique à plusieurs couches, selon la revendication 1,
caractérisé en ce que
la couche selon I représente une masse moulée à base d'un polyamide.

3. Tube en matière plastique à plusieurs couches, selon les revendications 1 et 2,
caractérisée en ce que
la couche selon II représente un copolymère de fluorure de vinylidène.

4. Tube en matière plastique à plusieurs couches, selon les revendications 1 à 3,
caractérisé en ce que
la couche selon III représente une masse moulée à base d'un mélange de
50 à 90 % en poids de composant III a et
10 à 50 % en poids de composant III b.

5. Tube en matière plastique à plusieurs couches, selon les revendications 1 à 4,
caractérisé en ce que
la couche selon III représente une masse moulée à base d'un mélange de
60 à 80 % en poids de composant III a, et
20 à 40 % en poids de composant III b.

6. Tube en matière plastique à plusieurs couches selon les revendications 1 à 5,
caractérisé en ce que
le composant III.b représente un copolymère à base de méthacrylate de méthyle, de styrène et d'anhydride maléique.

7. Tube en matière plastique à plusieurs couches selon les revendications 1 à 5,
caractérisé en ce que
le composant III.b possède des modules de base suivants :
i) < 100 % en poids de 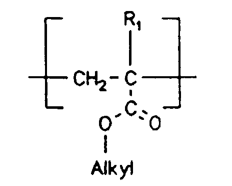
ii) < 100 % en poids de 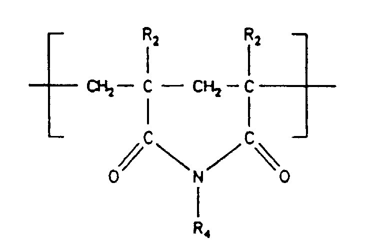
iii) < 30 % en poids de 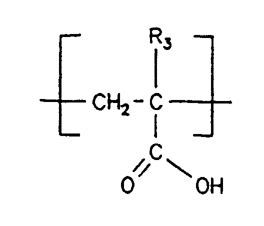 dans lesquels :
- alkyle signifie méthyle, éthyle, propyle, butyle ou hexyle,
- R₁ à R₄ signifie -H, -(CₙH₂ₙ₊₁)
- n signifie 0 à 6
et les substituants peuvent être identiques ou différents.

8. Tube en matière plastique à plusieurs couches selon les revendications 1 à 5,
caractérisé en ce que
le composant III.b possède des modules de base suivants :
i) 40 à 80 % en poids de 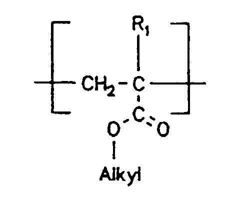
ii) 10 à 50 % en poids de 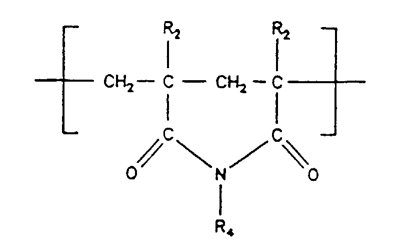
iii) 1 à 15 % en poids de 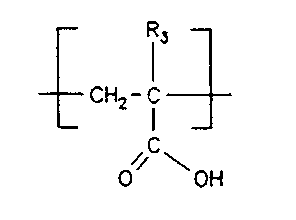 dans lesquels :
- alkyle signifie méthyle, éthyle, propyle, butyle, hexyle,
- R₁ à R₄ signifie -H, -(CₙH₂ₙ₊₁)
- n signifie de 0 à 6
et les substituants peuvent être identiques ou différents.

9. Tube en matière plastique à plusieurs couches selon la revendication 7 et la revendication 8,
caractérisé en ce que
le radical alkyle ainsi que R₁ à R₄ représentent un groupe méthyle.

10. Tube en matière plastique à plusieurs couches selon les revendications 1 à 9,
caractérisé en ce que
la couche selon I est formée par un composant selon III.

11. Utilisation du tube en matière plastique à plusieurs couches selon les revendications 1 à 10,
pour le transport de substances pétrochimiques.

12. Utilisation du tube en matière plastique à plusieurs couches selon les revendications 1 à 10,
pour le domaine de l'automobile pour la circulation de fluides de frein, de refroidissement et hydrauliques ainsi que de carburant.

13. Utilisation du tube en matière plastique à plusieurs couches selon les revendications 1 à 10,
pour la production de corps creux.

14. Utilisation du tube en matière plastique à plusieurs couches selon les revendications 1 à 10,
pour la fabrication de tubulures de remplissage de réservoir ou de réservoir de carburant dans le secteur de l'automobile.
